# EUROPÄISCHE PATENTSCHRIFT

(11) **EP 1 269 601 B1**
(45) Veröffentlichungstag und Bekanntmachung des Hinweises auf die Patenterteilung: **10.03.2004**
(21) Anmeldenummer: 01913650.6
(22) Anmeldetag: 12.02.2001
(51) Int. Cl.: H02J 5/00

(54) **ELEKTROHÄNGEBAHN MIT BERÜHRUNGSLOSER ENERGIEÜBERTRAGUNG**
ELECTRIC SUSPENDED CONVEYOR WITH CONTACTLESS ENERGY TRANSMISSION
CONVOYEUR AERIEN ELECTRIQUE A TRANSMISSION D'ENERGIE SANS CONTACT

(30) Priorität: 22.03.2000 DE 10014954
(43) Veröffentlichungstag der Anmeldung: 02.01.2003
(73) Patentinhaber: LJU Industrieelektronik GmbH, 14476 Gross Glienicke (DE)
(72) Erfinder: FUTSCHEK, Norbert, 14480 Potsdam (DE)
(74) Vertreter: Wablat, Wolfgang, Dr.Dr.
(86) Internationale Anmeldenummer: PCT/DE2001/000574
(87) Internationale Veröffentlichungsnummer: WO 2001/071882

(56) Entgegenhaltungen:
- EP-A- 0 818 868
- WO-A-98/57413
- DE-A- 4 446 779
- US-A- 5 619 078

## Beschreibung

Die Erfindung betrifft eine Elektrohängebahn mit berührungsloser Energieübertragung von einem längs einer Laufschiene geführten, an eine Wechselstromquelle höherer Frequenz angeschlossenen Speiseleiter und Rückleiter über einen als U-förmiger Ferritkern mit Wicklungen ausgebildeten, die Speiseleitung umfassenden Stromabnehmer auf den Steuerungs- und den Leitungsteil einer auf der Laufschiene verfahrbaren Transporteinheit.

Die berührungslose induktive Übertragung elektrischer Leistung auf mit elektrischen Verbrauchern versehene, an Schienen geführte Transporteinheiten ist seit langem bekannt. Beispielsweise beschreibt die DE 44 46 779 eine Anordnung zur berührungslosen induktiven Energieübertragung für auf einer geschlossenen Bahn bewegte, elektrisch angetriebene Transporteinheiten. Bei dieser Anordnung wird ein im Abstand von der Laufschiene gehaltener Speiseleiter, der von einer Wechselquelle höherer Frequenz versorgt wird, von dem jeweiligen Stromabnehmer, der an der betreffenden Transporteinheit abgebracht ist und mit dem Antriebsmotor und Steuerungsteil verbunden ist, umfaßt. Der Stromabnehmer besteht aus einem U-förmigen Ferritkern mit auf dessen Schenkeln angebrachter Wicklung. Die Übertragung der elektrischen Leistung vom Speiseleiter der Primärseite auf die Wicklungen der Sekundarseite erfolgt auf der Grundlage des Transformatorprinzips, wobei den unterschiedlichen Verbrauchern an der Transporteinheit ein der Leistungsanforderung entsprechendes Spannungsniveau zur Verfügung gestellt wird. Da aber das Steuerungsteil der Transporteinheit mit einer wesentlich geringeren Spannungsversorgung (24 V) auskommt als für das Leistungsteil erforderlich, ist ein erheblicher Schaltungsaufwand für die 24 V Gleichspannungs-Versorgung aus einer von dem Stromabnehmer bereitgestellten 560 V Gleichspannungsebene notwendig. Der Aufwand für den Rückleiter der Energiezufuhr auf der Primärseite, der in der DE 44 46 779 durch die Seitenwände eines den Stromabnehmer fast vollständig umschließenden Gehäuses gebildet wird, ist ebenfalls sehr hoch.

Der Erfindung liegt daher die Aufgabe zugrunde, eine Elektrohängebahn mit berührungsloser Übertragung der elektrischen Energie anzugeben, die in bezug auf die Stromübertragung von der Primärseite zu den unterschiedlichen Verbrauchern der Transporteinheiten mit geringem Aufwand hergestellt werden kann.

Erfindungsgemäß wird diese Aufgabe mit einer gemäß den Merkmalen des Patentanspruches 1 ausgebildeten Elektrohängebahn mit berührungsloser Energieübertragung gelöst.

Der Grundgedanke der Erfindung besteht dabei darin, daß die aus Aluminium bestehende Laufschiene für die Transporteinheiten der Hängebahn unmittelbar als Rückleiter benutzt wird. In der Kombination dieser Maßnahme mit der Anordnung von zwei separaten Wicklungen auf dem U-förmigen Ferritkern (Stromabnehmer), um unabhängig voneinander Gleichspannungen unterschiedlicher Höhe und Belastbarkeit für den Steuerungsteil und den Leistungsteil der Transporteinheit zur Verfügung stellen zu können und damit die Schaltung für die Bereitstellung der niedrigen Spannungsebene deutlich zu vereinfachen, wird der Gesamtaufwand für die Stromzufuhr zu den Verbrauchern der Transporteinheiten erheblich verringert.

Die erfindungsgemäße Zufuhr der elektrischen Energie zu den Transporteinheiten ist selbstverständlich nicht auf Hängebahnen beschränkt, sondern kann auch bei anderen Förderern, bei denen eine Transporteinheit auf einer Laufschiene verfahrbar und durch berührungslose induktive Übertragung mit Strom versorgt wird, gleichermaßen vorteilhaft angewendet werden. Auf diese Weise können die bekannten Vorteile von Transportanlagen mit berührungsloser Energieübertragung, die in der hohen Betriebssicherheit auch unter schwierigen Einsatzbedingungen sowie in der Wartungs- und Verschleißfreiheit, der Geräuscharmut, hoher Fördergeschwindigkeit und hohem Wirkungsgrad liegen, bei veringertem Aufwand genutzt werden.

Aus den Unteransprüchen und der nachfolgenden Beschreibung einer bespielhaft wiedergegebenen Ausführungsform ergeben sich weitere wichtige Merkmale der Erfindung, z.B. in bezug auf die Art der Bereitstellung eines mittelfrequenten Konstantstromes auf der Primärseite, die Anordnung und Halterung des Speiseleiters in einem an der Laufschiene anbringbaren, speziell ausgebildeten Halterahmen, die elektrische Ausbildung der Stromabnehmer oder die Ausbildung von Verzweigungsstellen der Hängebahn.

Ein Ausführungsbeispiel der Erfindung wird anhand der Zeichnung näher erläutert. Es zeigen:
- Fig. 1: eine schematische Darstellung einer Anordnung zur berührungslosen Übertragung elektrischer Energie auf eine Transporteinheit, die auf der Laufschiene einer Elektrohängebahn bewegbar ist;
- Fig. 2: eine teilweise perspektivisch dargestellte Schnittansicht eines an der Laufschiene einer Elektrohängebahn verrastbaren Speiseleiterträgers mit mechanischer Codierung zur Positionserfassung; tionserfassung;
- Fig. 3: eine Schaltungsanordnung zur Stromeinspeisung in die Primärseite der Anordnung zur berührungslosen Energieübertragung.
- Fig. 4: ein Prinzipschaltbild eines gemäß Fig. 3 vorgesehenen Brückengleichrichters;
- Fig. 5: ein Prinzipschaltbild der Konstantstromquelle für die Energieeinspeisung nach Fig. 3;
- Fig. 6: ein Prinzipschaltbild eines auf der Sekundarseite vorgesehenen Stromabnehmers;
- Fig. 7: eine Darstellung der Versorgung einer mobilen Speiseleitung im Bereich einer Bahnverzweigung; und
- Fig. 8: eine Darstellung einer Verzweigungsstelle nach Fig. 7, jedoch mit einem vorgeschalteten Sicherheitsblock.

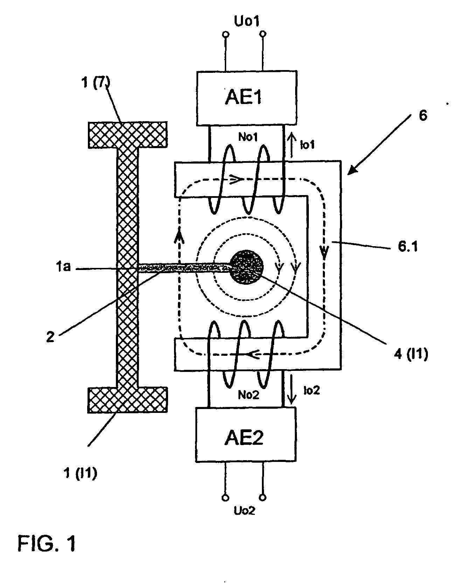

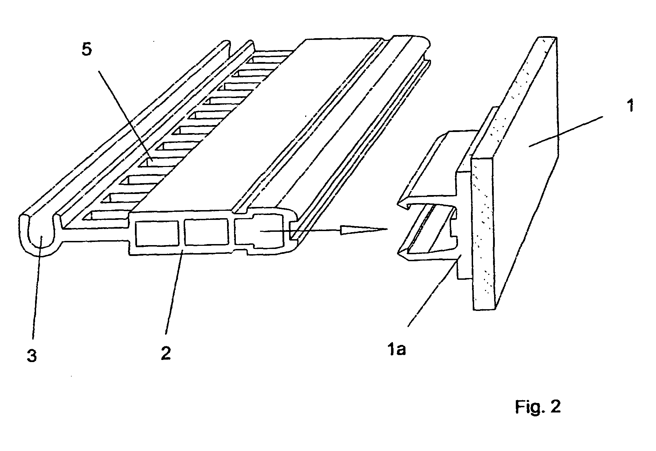

Die Anordnung zur berührungslosen Energieübertragung gemäß Fig. 1 umfaßt eine Laufschiene 1 aus Aluminium zur Führung einer mit einem Steuerungsteil und einem Leistungsteil versehenen Transporteinheit (nicht dargestellt) zum Tragen und Transportieren von Lasten. An der Laufschiene 1 ist ein Speiseleiterträger 2 aus einem nichtleitenden Material, vorzugsweise Kunststoff, angebracht, der an seinem freien, im Abstand von der Laufschiene 1 befindlichen Ende eine Halterinne 3 (siehe Fig. 2) zur Aufnahme eines als Hochfrequenzlitze ausgebildeten Speiseleiters 4 aufweist. Der Speiseleiterträger 2 ist außerdem - wie Fig. 2 zeigt - mit einer mechanischen Codierung 5 versehen, um mit einem an der Transporteinheit angebrachten Scanner (nicht dargestellt) eine absolute Positionserfassung der Transporteinheit sicherzustellen. Der Speiseleiterträger 2 besteht in gekrümmten Bereichen der Laufschiene 1 aus kurzen Segmenten (nicht dargestellt), die wie die linearen Speiseleiterträger 2 an einer Längsseite in mit der Laufschiene 1 verbundenen Kompakthaltern 1a verrastbar sind. Der Speiseleiterträger 2 ragt in einen als U-förmiger Ferritkern 6.1 gestaltenen Stromabnehmer 6, auf dessen beiden Schenkeln jeweils eine Wicklung N₀₁ bzw. N₀₂ angeordnet ist. Die Wicklungen N₀₁ und N₀₂ sind mit einer Abnehmerelektronik AE1 bzw. AE2 verbunden, die zwei getrennte Speisespannungen U₀₁ und U₀₂ zur Verfügung stellen, um die Transporteinheit mit Gleichstrom (I₀₁; I₀₂) zu versorgen. Die Wicklungen N₀₁ und N₀₂ sind unterschiedlich ausgelegt, so daß die Spannung U₀₁ und U₀₂ in unterschiedlicher Höhe und Belastbarkeit, und zwar zum einen für den Leistungsteil und zum anderen für den Steuerungsteil der jeweiligen Transporteinheit, zur Verfügung steht. Dadurch ist der Schaltungsaufwand für die Leistungselektronik sehr gering. Die Kleinspannung kann auch zur Versorgung von Kleinverbrauchern genutzt werden. Der Speiseleiter 4 befindet sich in dem U-förmigen Ferritkern (Stromabnehmer 6) mindestens in einer Tiefe von 40 % von dessen Gesamttiefe, um die Ausbildung des magnetischen Flusses im Ferritkern sicherzustellen und ausreichende magnetische Durchflutungen (N₀₁ • I₀₁, N₀₂ • I₀₂) bereitzustellen.

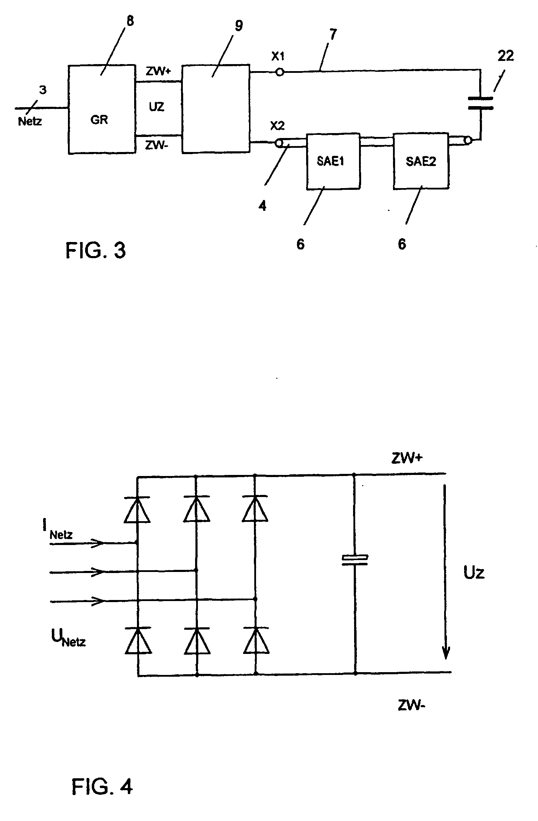

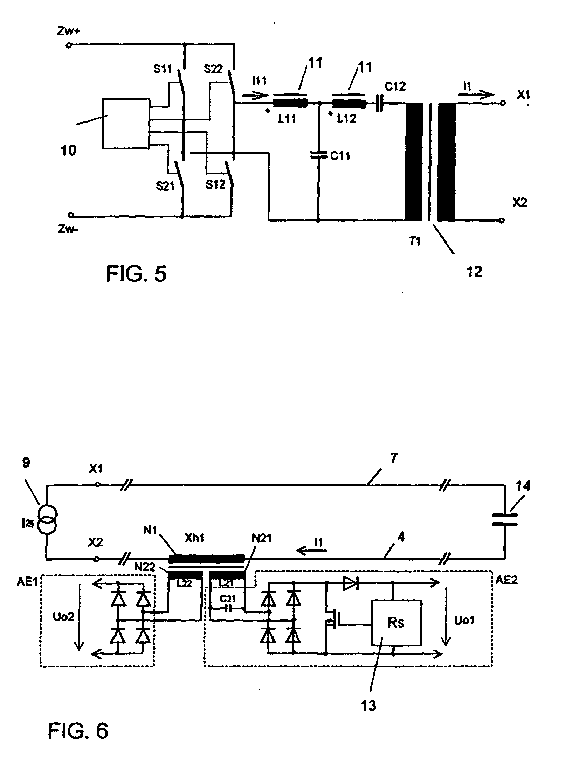

Die Stromeinspeisung in die aus dem Speiseleiter 4 und einem Rückleiter 7 bestehende Primärseite der Anordnung zur berührungslosen Energieübertragung erfolgt gemäß Fig. 3 aus einem dreiphasigen Niederspannungsnetz über einen 6-Puls-Brückengleichrichter 8, der eine Zwischenkreisspannung U_{z} bereitstellt. Eine Prinzipschaltung des Brückengleichrichters 8 ist in Fig. 4 wiedergegeben. Zur Einspeisung eines konstanten Mittelfrequenzstromes ist dem Brückengleichrichter 8 als Konstantstromquelle 9 (die in Fig. 5 in einem Schaltbild dargestellt ist), ein PWM-Wechselrichter 10, der auf zwei L-C-Glieder 11 und einem Ausgangstrafo 12 arbeitet, nachgeschaltet. Der PWM-Wchselrichter 10 bestimmt die Ausgangsfrequenz des Konstantstromes, während die beiden L-C-Glieder 11 für die Qualität der Sinusform des Konstantstromes und die Begrenzung des Störspektrums entlang des Speiseleiters verantwortlich sind.

In dem Schaltbild nach Fig. 3 sind zwei jeweils mit einem Verbraucher (nicht dargestellt) verbundene, entlang dem Speiseleiter bewegbare Stromabnehmer 6 dargestellt, die unterschiedliche Leistungen abfordern können. Ein Prinzipschaltbild eines an dem Speiseleiter 4 verfahrbarem Stromabnehmers 6 mit der in Fig. 1 angedeutetem Abnehmerelektronik AE1 und AE2 für jeweils unterschiedliche hohe Spannungen U₀₁ und U₀₂ ist in Fig. 6 dargestellt. In der Abnehmerelektronik AE2 ist mit dem Bezugszeichen 13 ein Regler (Rₛ) für die Schwingkreisgüte bezeichnet. Aufgrund der Konstantstromeinspeisung kommt es dabei nicht zu Rückwirkungen auf jeweils benachbarte Stromabnehmer 6. Zur Kompensation der induktiven Spannungsanteile und damit zur Erhöhung des Nutzeffektes der Anlage sind entlang der durch den Rückleiter 7 und dem Speiseleiter 4 gebildeten Transportbahn Kompensationsmodule 22 angeordnet, die in Fig.3 durch einen Kondensator wiedergegeben sind.

Während der Speiseleiter 4 eine feindrahtige Litze ist, die an mechanisch kritischen Stellen eine verstärkte Isolierung aufweist, wird als Rückleiter 7 die Laufschiene 1 genutzt. Die als Rückleiter 7 dienenden Laufschienensegmente 1 sind zum ohnehin notwendigen Potentialausgleich niederohmig kontaktiert, während an allen Dehnstellen flexible Erdungsbänder (nicht dargestellt) vorgesehen sind. Der Speiseleiter 4 kann mit Hilfe spezieller Modulations- und Demodulationstechniken auch als Kommunikationskanal für die Programmierung und Fernbedienung der Transporteinheiten genutzt werden.

Die Kommunikation mit der mit der Transporteinheit verbundenen Steuereinheit (nicht dargestellt) erfolgt hier jedoch in bekannter Weise über die in der Steuereinheit integrierten Infrarotmodule oder über Funkmodule.

Jede Steuereinheit besitzt standardmäßig ein Onbord-Infrarotmodul, das zur Programmierung und Fernbedienung des Laufwerkes der Transporteinheit benutzt wird. Weiterhin können diese mobilen Infrarotmodule an ausgewählten Stellen im Bahnverlauf mit speziellen Lese-Beschriftungs-Stationen kommunizieren, die wiederum von der übergeordneten Anlagensteuerung verwaltet werden. An diesen Stellen können Status- und Befehlsinformationen ausgetauscht werden und in der Steuereinheit in einem spannungsausfallsicheren Datenspeicher hinterlegt werden. Diese IR-Module können je nach Bedarf auch zu Start/Stop-Funktionen o.ä. genutzt werden.

Ähnlich der IR-Technik können auch mobile Funkmodule zum Einsatz kommen, die als optionaler Bestandteil der Steuereinheit integrierbar sind, jedoch eine permanente Kommunikation mit der Anlagensteueruung erlauben. Aufgrund begrenzter Reichweiten in rauher Industrieumgebung wird in diesem Fall ein Verbund von festen Funkstationen installiert, wobei jede einzelne Station eine Zelle darstellt. Diese Einzelzellen überschneiden sich, so daß alle im Bahnverlauf befindlichen Transporteinheiten sicher erreichbar sind. Dieser Funkstationenverbund wird so gesteuert und überwacht, daß Fahrwerke ohne Datenverlust beim Verlassen einer Zelle abgemeldet und sicher bei der nächsten Zelle angemeldet werden können. Mit dieser Technik lassen sich auch grobe Kontingentabschätzungen realisieren. Im Zusammenspiel mit einer Positionserfassung erhält man ein transparentes Anlagenabbild aller Laufwagen und kann je nach Kommunikationsbandbreite in der Anlagensteuerung übergeordnete Steuerverfahren zum Einsatz bringen.

An der Steuereinheit steht ein Scanner (nicht dargestellt) zur Verfügung, der mit Hilfe der mechanischen Codierung 5 eine absolute Positionserfassung entlang des Verfahrweges realisiert. Weiterhin wird diese Information auch zur internen Motorregelung genutzt. Sprünge oder andere Unstetigkeiten im Absolutcodeverlauf können nullspannungssicher in der Steuereinheit hinterlegt werden, und man kann bei der Verlegung der Absolutcodeschiene 5 fehlertoleranter werden. Nützlich ist diese Funktion insbesondere dann, wenn der Scanner die Speiseleiterträger 2 abtastet, die mit einer mechanischen Codierung 5 versehen sind.

Die Steuerungseinheit ist so gestaltet, daß sie einen Standardgetriebemotor mit antriebsseitig montiertem, Trieb- und Trageeigenschaften übernehmendem Rad und elektromechanischer Bremse oder eine Linearmotoreinheit mit elektromechaischer Bremsanordnung als reine Haltebremse direkt ansteuern kann.

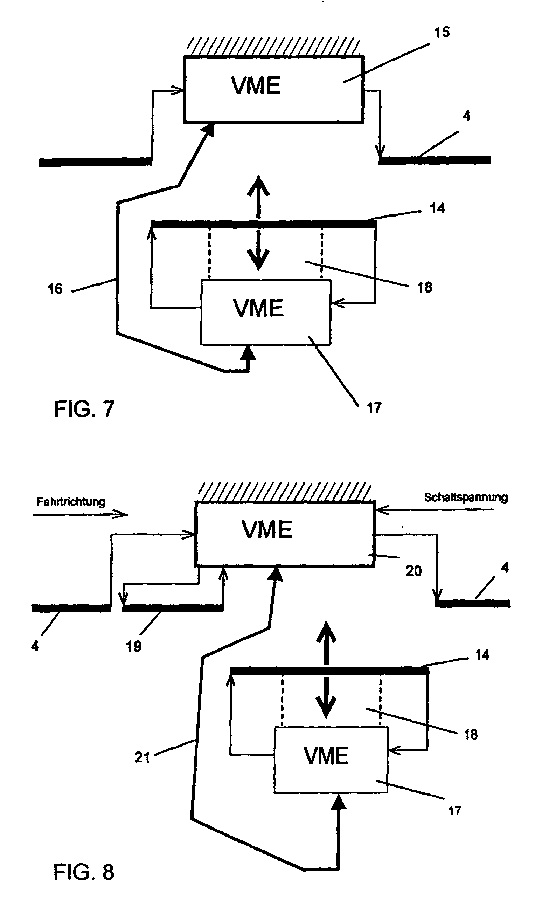

In Verzweigungsbereichen der Elektrohängebahn, wie Weichen, Kreuzungen, Hub-, Senk- und Verschiebestationen, sind, wie Fig. 7 zeigt, an einer Mobilstation 18 angebrachte, mobile Speiseleiter 14 vorgesehen, die von einem in Bahnnähe fest installiertem Einspeisungsmodul 15, das über ein Schleppkabel 16 und ein mobiles Einspeisungsmodul 17 mit dem mobilen Speiseleiter 14 verbunden ist, mit hochfrequentem Strom versorgt werden können.

Wie Fig. 8 zeigt, sind vor und in Verzweigungen NOT-AUS-Segmente und Sicherheitsblöcke 19 ausgebildet, die an in Bahnnähe fest installierte Versorgungsmodule 20 angeschlossen sind, um mit herkömmlichem Schaltungsaufwand partielle Abschaltsegmente zu schaffen. Das Versorgungsmodul 20 ist so ausgebildet, daß es über ein Schleppkabel 21 an ein Einspeisungsmodul 17 angeschlossen werden kann.

### Bezugszeichenliste

- 1: Laufschiene (Rückleiter)
- 1a: Kompakthalter
- 2: Speiseleiterträger
- 3: Halterinne
- 4: Speiseleiter
- 5: mechanische Codierung (Schlitzcodierung)
- 6: Stromabnehmer (SAE1, SAE2)
- 6.1: Ferritkern
- 7: Rückleiter
- 8: 6-Puls-Brückengleichrichter (GR)
- 9: Konstantstromquelle
- 10: PWM-Wechselrichter
- 11: L/C-Glieder
- 12: Ausgangstrafo
- 13: Regler (RS)
- 14: mobiler Speiseleiter
- 15: stationäres Einspeisungsmodul (VME)
- 16, 21: Schleppkabel
- 17: mobiles Einspeisungsmodul (VME)
- 18: Mobilsektion
- 19: Sicherheitsblock
- 20: Versorgungsmodul (VMS)
- 22: Kompensationsmodule
- AE1: Abnehmerelektronik
- AE2: Abnehmerelektronik
- N₀₁, N₀₂: Wicklungen von 6
- U₀₁, U₀₂: Speisespannung für Transporteinheit
- U_{z}: Zwischenkreisspannung
- I₁: konstanter Mittelfrequenzstrom

## Patentansprüche

1. Elektrohängebahn mit berührungsloser Energieübertragung von einem längs einer Laufschiene geführten, an eine Wechselstromquelle höherer Frequenz angeschlossenen Speiseleiter mit Rückleiter über einen als U-förmiger Ferritkern mit Wicklungen ausgebildeten, die Speiseleitung umfassenden Stromabnehmer auf den Steuerungs- und Leistungsteil einer auf der Laufschiene verfahrbaren Transporteinheit, **dadurch gekennzeichnet, daß** der Rückleiter (7) unmittelbar durch die Laufschiene (1) gebildet ist und auf dem von dem Ferritkern gebildeten Stromabnehmer (6) zwei voneinander getrennte, unterschiedlich ausgelegte Wicklungen (N₀₁; N₀₂) zur Bereitstellung unterschiedlich hoher Speisespannungen (U₀₁; U₀₂) für den Leistungsteil bzw. den Steuerungsteil der Transporteinheit vorgesehen sind.

2. Elektrohängebahn nach Anspruch 1, **dadurch gekennzeichnet, daß** der aus Hochleistungslitze bestehende Speiseleiter (4) in einem an der Laufschiene (1) isoliert befestigten Speiseleiterträger (2) aus linearen und kurzen plattenartigen Einzelsegmenten gehalten ist.

3. Elektrohängebahn nach Anspruch 2, **dadurch gekennzeichnet, daß** die Segmente des Speiseleiterträgers (2) in einem an der Laufschiene (1) befestigten Kompakthalter (1a) verastbar sind und stirnseitig aneinanderstoßen oder zusammensteckbar sind.

4. Elektrohängebahn nach Anspruch 2 und 3, **dadurch gekennzeichnet, daß** an dem von der Laufschiene (1) abgewandten freien Ende des Speiseleiterträgers (2) eine Halterinne (3) zur Aufnahme des Speiseleiters (4) ausgebildet ist.

5. Elektrohängebahn nach einem der Ansprüche 2 bis 4, **dadurch gekennzeichnet, daß** in dem plattenartigen Speiseleiterträger (2) eine mechanische Codierung (5) in Form einer Schlitzcodierung zur Positionserfassung der Transporteinheiten mit einem an diesen angebrachten Scanner vorgesehen ist.

6. Elektrohängebahn nach Anspruch 1, **dadurch gekennzeichnet, daß** der Speise- und Rückleiter (4, 7) über einen 6-Puls-Brückengleichrichter (8) zur Bereitstellung eine Zwischenkreisspannung (V_{z}) und eine Konstantstromquelle (9) mit PWM-Wechselrichter (10), die auf zwei L/C-Glieder (11) und einen Ausgangstrafo (12) arbeitet, an ein dreiphasiges Niederspannungsnetz angeschlossen sind, um einen Konstantstrom von bestimmter höherer Frequenz in den Speiseleiter (4) einzuspeisen.

7. Elektrohängebahn nach Anspruch 6, **dadurch gekennzeichnet, daß** der auf der Primärseite eingespeiste Konstantstrom eine Mittelfrequenz von ≤ 20 kHz aufweist.

8. Elektrohängebahn nach einem der Ansprüche 1 bis 7, **dadurch gekennzeichnet, daß** die Programmierung und Fernbedienung der Transporteinheiten über in deren Steuerungsteil integrierte Infrarot- oder Funkmodule erfolgt.

9. Elektrohängebahn nach einem der Ansprüche 1 bis 7, **dadurch gekennzeichnet, daß** der Speiseleiter (4) unter Anwendung bestimmter Modulationskreis- und Demodulationstechniken als Kommunikationskanal zur Programmierung und Fernbedienung der Transport-einheiten nutzbar ist.

10. Elektrohängebahn nach einem der Ansprüche 1 bis 9, **dadurch gekennzeichnet, daß** in deren Verzweigungsbereichen jeweils ein an einer Mobilsektion (18) angebrachter mobiler Speiseleiter (14) mit einem mobilen Einspeisungsmodul (17), der von einem fest installierten Einspeisungsmodul (15) über ein Schleppkabel (16) versorgt wird, vorgesehen ist.

11. Elektrohängebahn nach einem der Ansprüche 1 bis 10, **dadurch gekennzeichnet, daß** vor bzw. in Verzweigungen NOT-AUS-Segmente und Sicherheitsblöcke (19) angeordnet sind, die an in Bahnnähe fest installierte Versorgungsmodule (20) angeschlossen sind, wobei das betreffende Versorgungsmodul (20) über ein Schleppkabel (21) an ein mobiles Einspeisungsmodul (17) anschließbar ist.

## Claims

1. An electric telpher with non-contact power transmission from a feeder and return conductor conducted along a slide rail and connected to a higher-frequency AC power supply via a current collector configured as a U-shaped ferrite core with windings that encompasses the supply line to the control and power circuits of a transfer unit that can travel on the slide rail, **characterized in that** the return conductor (7) is directly formed by the slide rail (1) and that two separate and differently rated windings (N₀₁; N₀₂) are provided on the current collector (6) formed by the ferrite core that provide different supply voltages (U₀₁; U₀₂) to the power circuit and control circuit of the transfer unit, respectively.

2. The electric telpher according to claim 1, **characterized in that** the feeder (4) that consists of high-duty litz wire is held in a feeder bracket (2) that consists of individual linear and short platelike segments and is mounted to and insulated against the slide rail (1).

3. The electric telpher according to claim 2, **characterized in that** the segments of the feeder bracket (2) can be locked into a compact holder (1a) attached to the slide rail (1) whose front ends abut or can be fit into one another.

4. The electric telpher according to claim 2, **characterized in that** the free end of the feeder bracket (2) that faces away from the slide rail (1) comprises a holding groove (3) for receiving the feeder (4).

5. The electric telpher according to any one of the preceding claims 2, **characterized in that** the platelike feeder bracket (2) comprises a mechanical coding (5) in the form of a slot code for detecting the position of the transfer units using a scanner mounted on these transfer units.

6. The electric telpher according to claim 1, **characterized in that** feeder and return conductor (4, 7) are connected to a three-phase low-voltage system via a six-pulse bridge rectifier (8) that supplies a link voltage (V_{z}) and via a stabilized power supply (9) with PWM rectifier inverter (10) that works on two LC components (11) and an output transformer (12) to feed a constant current of a specific higher frequency into the feeder (4).

7. The electric telpher according to claim 6, **characterized in that** the constant current fed into the primary circuit has a medium frequency of ≤ 20 kHz.

8. The electric telpher according to any one of the preceding claim 1, **characterized in that** the transfer units are programmed and remote controlled using the infrared or radio modules that are integrated into their control circuit.

9. The electric telpher according to any one of the preceding claim 1, **characterized in that** the feeder (4) can be used as a communication channel for the programming and remote control of the transfer units by applying specific modulation and demodulation methods.

10. The electric telpher according to any one of the preceding claim 1, **characterized in that** a mobile feeder (14) with a mobile feeder module (17) and attached to a mobile section (18) is provided in junction areas of the telpher, and that this mobile feeder (14) is supplied from a permanently installed feeder module (15) via a trailing cable (16).

11. The electric telpher according to any one of the preceding claim 1, **characterized in that** emergency stops and safety blocks (19) that are connected to stationary supply modules (20) in the vicinity of the track are provided in front of or inside junctions, and that the respective supply module (20) can be connected to a mobile feeder module (17) via a trailing cable (21).

## Revendications

1. Convoyeur électrique suspendu avec transmission d'énergie sans contact depuis une ligne d'alimentation menée le long d'un rail de circulation et raccordée à une source de courant alternatif à haute fréquence avec ligne de retour, via un récepteur de courant réalisé sous forme d'un noyau de ferrite en forme de U avec des enroulements et entourant la ligne d'alimentation, le récepteur de courant étant agencé sur la partie de commande et de puissance d'une unité de transport susceptible de circuler sur le rail de circulation, **caractérisé en ce que** la ligne de retour (7) est formée directement par le rail de circulation (1), et **en ce que** sur le récepteur de courant (6) formé par le noyau de ferrite sont prévus deux enroulements (N₀₁ ; N₀₂) séparés l'un de l'autre et de conceptions différentes pour la mise à disposition de tensions d'alimentation (U₀₁ ; U₀₂) d'amplitude différente pour la partie de puissance, ou respectivement la partie de commande, de l'unité de transport.

2. Convoyeur électrique suspendu selon la revendication 1, **caractérisé en ce que** la ligne d'alimentation (4) constituée de torons à haute puissance est maintenue dans un support (2) de ligne d'alimentation, fixé de manière isolée sur le rail de circulation (1) et constitué par des segments individuels linéaires et courts analogues à des plaquettes.

3. Convoyeur électrique suspendu selon la revendication 2, **caractérisé en ce que** les segments du support (2) de ligne d'alimentation peuvent être enclenchés dans un support compact (1a) fixé sur le rail de circulation (1), est **en ce qu'**ils sont disposés bout-à-bout ou mutuellement enfichés du côté frontal.

4. Convoyeur électrique suspendu selon l'une ou l'autre des revendications 2 et 3, **caractérisé en ce que**, à l'extrémité libre du support (2) de ligne d'alimentation détournée du rail de circulation (1), est réalisée une goulotte de maintien (3) pour la réception de la ligne d'alimentation (4).

5. Convoyeur électrique suspendu selon l'une des revendications 2 à 4, **caractérisé en ce que** dans le support (2) de ligne d'alimentation, analogue à des plaquettes, est prévu un codage mécanique (5) sous la forme d'un codage à fentes pour la détection de position des unités de transport, au moyen d'un scanner monté sur celles-ci.

6. Convoyeur électrique suspendu selon la revendication 1, **caractérisé en ce que** la ligne d'alimentation et la ligne de retour (4, 7) sont raccordées à un réseau triphasé à basse tension par l'intermédiaire d'un redresseur en pont (8) à six impulsions pour la mise à disposition d'une tension de circuit intermédiaire (U_{z}) et à une source de courant constant (9) avec onduleur (10) à modulation de largeur d'impulsion, laquelle alimente deux circuits L/C (11) et un transformateur de sortie (12), afin d'alimenter dans la ligne d'alimentation (4) un courant constant à fréquence élevée déterminée.

7. Convoyeur électrique suspendu selon la revendication 6, **caractérisé en ce que** le courant constant alimenté du côté primaire présente une fréquence moyenne inférieure ou égale à 20 kilohertz.

8. Convoyeur électrique suspendu selon l'une des revendications 1 à 7, **caractérisé en ce que** la programmation et la télécommande des unités de transport ont lieu via un module à infrarouge ou un module radio intégré dans leur partie de commande.

9. Convoyeur électrique suspendu selon l'une des revendications 1 à 7, **caractérisé en ce que** la ligne d'alimentation (4) est utilisable, en appliquant des techniques déterminées à circuits de modulation et de démodulation, à titre de canal de communication pour la programmation et la télécommande des unités de transport.

10. Convoyeur électrique suspendu selon l'une des revendications 1 à 9, **caractérisé en ce que** dans des zones de ramifications, il est prévu respectivement une ligne d'alimentation mobile (14), montée sur une station mobile (18), avec un module d'alimentation mobile (17), lequel est alimenté via un câble traîné (16) depuis un module d'alimentation (15) installé de manière fixe.

11. Convoyeur électrique suspendu selon l'une des revendications 1 à 10, **caractérisé en ce qu'**il est prévu des segments de coupure d'urgence et des blocs de sécurité (19), en amont ou à l'intérieur des ramifications, qui sont raccordés à des modules d'alimentation (20) installés de manière stationnaire à proximité de la voie, et **en ce que** le module d'alimentation concerné (20) peut être raccordé à un module d'alimentation mobile (17) par l'intermédiaire d'un câble traîné (21).
